# EUROPEAN PATENT APPLICATION

(11) **EP 1 627 570 A1**
(43) Date of publication of application: **22.02.2006**
(21) Application number: 04077348.3
(22) Date of filing: 19.08.2004
(51) Int. Cl.: A23J 3/04, A23J 1/08

(54) **Egg protein compositions, their preparation and their use for cold or heat gelation**

(71) Applicant: Wageningen Centre for Food Sciences, 6703 GW Wageningen (NL)
(72) Inventor: Visschers, Ronald Willem, 6718 HW Ede (NL); Van de Velde, Freddie, 6715 HJ Ede (NL); Weijers, Mireille, 6845 AV Arnhem (NL)
(74) Representative: van Westenbrugge, Andries

(57) **Abstract**

The invention relates to an egg protein composition having a reduced conalbumin content, and to a process for preparing such a composition. Gelled aqueous compositions based on egg proteins are widely used, particularly in the food industry. It is now found that the functional properties of egg protein containing gelling agents can be altered favourably through the removal of interfering components, especially conalbumin. The removal of conalbumin can be achieved by applying selective adsorption or precipitation, by employing ion-exchange chromatography and/or one or more treatments selected from heating, chemically induced precipitation, such as with ethanol, and high-pressure treatment, followed by decantation, elution, centrifugation and/or filtration. Such a composition can be used as a gelling agent capable of cold and heat gelation and advantageously be employed in foodstuffs, beverages, oral care products and pharmaceutics.

## Description

### TECHNICAL FIELD OF THE INVENTION

The present invention relates to an egg protein composition, in particular to an egg protein composition having a weight ratio of ovalbumin to conalbumin exceeding 10:1, and to a process for preparing such a composition. The present invention also relates to the use of such a composition as a gelling agent capable of cold and heat gelation. These compositions can advantageously be employed in foodstuffs, beverages, oral care products and pharmaceutics.

### BACKGROUND OF THE INVENTION

Gelled aqueous compositions based on egg proteins are widely used, particularly in the food industry. Aqueous solutions of these so called globular proteins are known to form gels as a result of heat and/or acid induced coagulation. In some food applications globular proteins are used to impart a desirable rheology to a food product. By adding the protein to the aqueous phase and allowing it to gel, the aqueous phase becomes "structured", meaning that it looses its capability to flow, acquires elastic properties, holds water and keeps particles suspended therein.

Ovalbumin as the main constituent of egg white proteins is known to contribute largely to the gelling properties of egg white. Upon gelation linear aggregates of ovalbumin are intertwined. However, the non-food grade status of highly purified ovalbumin makes it undesirable for commercial application in the food industry. Furthermore, the application of highly purified ovalbumin in food products is not economical.

It is more favourable to use more "crude" egg white protein compositions comprising also other egg proteins besides ovalbumin. WO 03/99041 and JP 60058056 teach processes wherein prior to heating the pH of an egg white composition is taken away from the iso-electric point either by adding sodium hydroxide or by using an acid protease under acid conditions following hydrolysis of the egg white so as to improve its gelling characteristics. A drawback of the thus prepared gelled networks is their limited gel strength.

US 4,738,855 discloses a gel material with improved gel strength comprising dried egg albumen and vitamin C, wherein the free thiol groups of the heat coagulating protein in the egg albumen are converted to disulfide bonds by the action of vitamin C. However, the use of the relatively unstable and expensive vitamin C makes it an unattractive process for many food applications.

Hence, there is a need for gelling agents comprised of egg proteins, which agents do not suffer from the above-mentioned drawbacks of poor textural properties and limited gel strengths, and which can be used to provide desirable gel characteristics without the need for additional constituents.

### SUMMARY OF THE INVENTION

The inventors have unexpectedly found that particular egg protein components interfere with the formation of linear ovalbumin aggregates, and that the functional properties of such ovalbumin containing gelling agents can be altered favourably through the removal of these interfering components. The removal of these particular components, especially of conalbumin, can be achieved by applying one or more treatments selected from heating, ion-exchange chromatography, selective precipitation induced by added chemicals, such as ethanol, and high-pressure treatment, followed by decantation, elution, centrifugation and/or filtration. The gelling egg protein compositions according to the present invention can be used to prepare gels that have improved textural properties in comparison to gels obtained from gelling agents derived from commercially available egg white compositions.

The gelling composition according to the present invention is characterised by an ovalbumin content of at least 5 wt% and a weight ratio of ovalbumin to conalbumin of at least 10:1. The present composition may suitably take the form of a reconstitutable powder. Due to its improved and adjustable gelling properties such a powder may advantageously be used in the preparation of foodstuffs, beverages, oral care products and pharmaceutics.

It has further been found that the gelling compositions according to the invention are capable of both heat-induced and cold-set gelation. Cold-set gelation of the present composition can be achieved under the influence of acidification or salt addition subsequent to heat induced coagulation under conditions that do not favour gel formation. Heat induced coagulation without significant gelation can be achieved by desalinating the present composition prior to heat coagulation. The desalination treatment according to the present invention offers the advantage that the suspension of coagulates can be dried and stored for later use.

### DETAILED DESCRIPTION ACCORDING TO THE INVENTION

Accordingly, one aspect of the invention relates to an egg protein composition comprising, calculated on total dry weight:
- 5-95 wt% ovalbumin;
- 0-10 wt% conalbumin; and
- 0.2-40 wt%, preferably at least 5 wt%, of one or more other egg proteins selected from the group consisting of ovomucoid and lysozyme;

wherein the weight ratio of ovalbumin to conalbumin exceeds 10:1, more preferably exceeds 15:1. Most preferably said weight ratio exceeds 20:1. Typically, the weight ratio of ovalbumin to conalbumin will not exceed 200:1, preferably it will not exceed 100:1 as virtually complete removal of conalbumin is neither necessary nor economical.

The term "egg protein" as used hereinrefers to proteins naturally present in bird eggs. Likewise, also the term "egg white" refers to egg white obtained from bird eggs. Preferably, the egg protein and egg white are obtained from a hen's egg. The egg proteins can be obtained from fresh eggs, spray-dried egg-white compositions or any other suitable source known in the art.

Hen's egg white is a mixture of proteins, salts and carbohydrates and typically exhibits a solids content of around 12 wt% and contains about 88 wt% water. The solids are largely comprised of proteins (about 10 wt% of the egg white composition), of which in turn more than half consists of ovalbumin. Other important egg white proteins are conalbumin, ovomucoid, lysozyme, ovomucin, flavoprotein-apoprotein and avidin. The non-haem iron-binding egg protein conalbumin is sometimes referred to as "ovotransferrin". Unmodified hen's egg white is typically characterised by a weight ratio of ovalbumin to conalbumin of about 4:1 to 5:1, and a weight ratio of the sum of the egg white proteins ovomucoid and lysozyme to conalbumin of about 1:1.

In a preferred embodiment, the present invention provides an egg protein composition exhibiting a weight ratio of the other egg proteins (ovomucoid and lysozyme) to conalbumin exceeding 2:1, preferably 3:1.

The composition of the invention can suitably take the form of a liquid (e.g. an aqueous solution), a paste, a powder, granules, tablets etc. Preferably, the present composition is a concentrate comprising less than 10 wt%, preferably less than 8 wt%, more preferably less than 5 wt% of solvent, preferably water, based on the total weight of the composition. It is noted that throughout the description and claims the words "suspension" and "solution" are interchangeably.

In a particularly preferred embodiment the composition is in the form of a free flowing powder. By a "free flowing powder" it is meant that the composition essentially consists of discrete solid particles that exhibit flow behaviour. Such a free flowing powder offers the advantage that it is storage stable and easy to handle.

The composition of the invention can suitably be applied to produce gels through either heat-induced or cold gelation. Heat-induced or heat set gelation typically occurs when heating the composition to a sufficiently high temperature (at least 60 °C) at a sufficiently high salt concentration (at least 10mM) to induce ovalbumin denaturation, thereby inducing disulphide cross-linking of the ovalbumin contained in the composition. The structure of the resulting gel is composed of relatively large protein aggregates.

Cold gelation or cold set gelation can be used to produce gels having enhanced textural functionalities such as transparency, elasticity, stress and strain at fracture, decreased syneresis, and improved water-holding capacity. Like heat-induced gelation, cold gelation also involves the formation of aggregates, albeit of a different type, through heating of and/or applying high pressure to an aqueous ovalbumin solution. In case of cold gelation, during the aggregate formation step gelation is avoided. This is achieved by ensuring that the ovalbumin solution exhibits a sufficiently low ionic strength such that gelation does not occur spontaneously during or after heating. The actual gelation is subsequently induced e.g. by acidifying the solution to a pH near the iso-electric point, preferably within 1.0 pH unit, of the iso-electric point of ovalbumin, or by adding salt. At these conditions the thiol groups present on the surface of the aggregates of the ovalbumin react to form disulfide bridges between the aggregates, yielding a gel network.

It was noticed that the present egg protein composition exhibits very favourable cold set gelling properties provided the salt content of the composition has been reduced such as increased transparency and lowered stress at fracture. More particularly, the salt content of the solution of egg proteins of the present invention is advantageously reduced to obtain a powder composition exhibiting conductivity of less than 0.1 mS, preferably even less than 0.01 mS at a concentration of 1 wt% ovalbumin, based on the total weight of the composition, including solvent. If the composition has a higher ovalbumin content, it is characterized in that upon dilution in demineralised water to a concentration of 1 wt% ovalbumin, said solution exhibits a conductivity of less than 0.1 mS, preferably even less than 0.01 mS.

The egg protein composition may suitably contain additives known in the art, including thickening agents, gelling agents, anti-caking agents, vitamins, minerals, colourings and flavourings.

It is a further object of the invention to provide a process for preparing an egg protein powder composition comprising:
i) providing a solution of egg proteins including ovalbumin and conalbumin and one or more other egg proteins selected from the group consisting of ovomucoid and lysozyme; and
ii) isolating an ovalbumin-rich fraction in which the weight ratio of ovalbumin to conalbumin is at least twice as high as the same ratio of the solution of egg proteins prepared in step i),

said ovalbumin-rich fraction comprising, calculated on total dry weight, 5-95 wt% ovalbumin and 0.2-40 wt%, preferably at least 5 wt%, of the one or more other egg proteins. Preferably, the solvent employed in step i) is a polar liquid, most preferably it is water. The first step of "dissolving" is also understood to comprise the formation of a suspension of egg proteins.

In a preferred embodiment, the egg protein solution obtained in step i) contains 1 to 20 wt%, preferably of 3 to 8 wt% of the combination of ovalbumin and conalbumin, calculated on the total weight of the solution. It is further preferred that said solution contains at least 0.02 wt%, preferably at least 0.05 wt% of one or more other egg proteins selected from the group consisting of ovomucoid and lysozyme, calculated on the total weight of the solution. Preferably the solution obtained in step i) comprises 5 to 75 %, more preferably 10 to 50 % of the one or more other egg proteins, based on the weight of the ovalbumin.

In the second step ii) the weight ratio of ovalbumin to conalbumin can suitably be increased by subjecting the egg protein solution to selective adsorption and/or selective precipitation, followed by isolating an ovalbumin-rich fraction by means of decantation, elution, centrifugation and/or filtration.

Where the conalbumin content is reduced using selective adsorption, it is preferred to involve ion exchange chromatography. When selective precipitation is used, it preferably involves one or more treatments selected from heating, chemically induced precipitation, such as with ethanol, and application of high pressure. In accordance with the present invention the aforementioned heating or high-pressure treatments are used to selectively precipitate ovalbumin or conalbumin, preferably conalbumin, followed by separating the precipitated material from the supernatant.

When the aforementioned treatment involves heating, it is understood that the solution is subjected to a heating regime that is sufficient to denature more than 50 %, preferably even more than 80 % of the conalbumin contained in the solution, but at conditions mild enough to leave more than 50 %, preferably even more than 75 % of the ovalbumin fraction contained in the solution intact, i.e. essentially undenatured. This typically involves temperatures between 50 and 90 °C, preferably between 55 and 70 °C and time scales between 1 and 60 minutes, preferably between 10 and 45 minutes. Under such conditions the ovomucoid fraction remains largely intact (50% or more). Table 1 shows the effect of various, relevant combinations of heating time and temperature on the egg white constituents.

When the treatment involves a high-pressure treatment, the egg protein solution is subjected to hyperbaric treatment that induces precipitation of one or more protein components, while leaving others unchanged. This typically involves applying a hydrostatic pressure of 100-10,000 MPa, preferably at least 300 MPa, for a period of seconds to hours, preferably between 1 and 120 minutes. After releasing the pressure the precipitated material can be separated by means of filtering, decanting or centrifugation or a combination of these methods.

Precipitation through the addition of chemicals involves addition of a solvent or salt to the egg protein solution to induce preferential precipitation conalbumin or ovalbumin, preferably of the conalbumin. Suitable solvents comprise alcohols, such as ethanol, and glycols, and salts may comprise mono-bi and trivalent anions and cations in any suitable combination.

When the treatment involves ion exchange chromatography, the egg-white composition in contacted with an ion-exchange resin that selectively binds ovalbumin or conalbumin. Examples of such a resin are anion and cation exchange resins or membranes. Specific conditions can be chosen such that a fraction enriched in ovalbumin is produced either by selectively binding the ovalbumin, or by selectively binding other proteins to the ion-exchange resin. Separation can be achieved in a batch processing method, in which the resin is stirred together with the egg-white composition and after binding the desired protein fraction is subsequently removed by means of decanting, filtration, centrifugation or a combination of these methods. Alternatively, the resin can be contained in a column through which the egg white composition is passed in a flowing process.

| Heating time (minutes) | Heating temperature (°C) | Ovomucoid (wt%) | Lysozyme (wt%) | Conalbumin (wt%) | Ovalbumin (wt%) |
|---|---|---|---|---|---|
| 30 | not heated | 13 | 0.6 | 8.2 | 78 |
| 30 | 45 | 13 | 0.6 | 7.7 | 81 |
| 30 | 50 | 13 | 0.6 | 5.6 | 76 |
| 30 | 55 | 13 | 0.6 | 1.8 | 65 |
| 30 | 60 | 13 | 0.6 | 0.7 | 58 |
| 30 | 70 | 13 | 0.5 | 0.2 | 24 |
| 30 | 78 | 13 | 0.5 | 0.0 | 6.8 |
| | | | | | |
| 2 | 60 | 13 | 0.6 | 3.6 | 74 |
| 10 | 60 | 13 | 0.6 | 0.9 | 65 |
| 30 | 60 | 13 | 0.6 | 0.7 | 58 |

**Table 1:** The influence of heating time and temperature on the protein composition of hen's egg white. The initial concentration at heating was 30 g/L of High pH hen's egg white powder, van Enthoven B.V., The Netherlands for all experiments. The composition of the water-soluble fraction was analyzed for its ovomucoid, lysozyme, conalbumin and ovalbumin content after heating, acidification and centrifugation. The first row, i.e. "not heated", has been subjected to the same acidification and centrifugation steps as the others, except for a heating step and is taken as the reference composition. Therefore the composition of the "not heated" sample does not reflect the composition of the commercial product with an ovalbumin:conalbumin ratio of about 4.1:1. The recovered amount of egg proteins contained in the non-heated sample was lower (about 80 %), but to compare with the heated samples it is set at 100 %. The concentration of protein constituents in the heat treated compositions is expressed in rounded numbers relative to the egg protein content of the non-heated sample.

After heating, ion exchange chromatography, selective precipitation induced by added chemicals and/or application of high-pressure, the precipitated material is suitably removed in step ii) through decantation, filtration or centrifugation. Depending on the nature of the treatment preceding the isolation, the ovalbumin-rich fraction may be isolated in the form of a precipitate or, alternatively it may be retained as the supernatant, following removal of the precipitate. Typically, in the present process at least 50%, preferably at least 70% and most preferably at least 80% of the ovalbumin contained in the solution of step i) is recovered in the ovalbumin-rich fraction. The ovalbumin/conalbumin ratio in the present ovalbumin-rich fraction may suitably be manipulated by applying combinations of the aforementioned treatments. Preferably, such a combinational treatment comprises at least a mild heating step, e.g. heating to a temperature within the range of 50-70 °C for 1-60 minutes.

Where the ovalbumin-rich fraction obtained in isolation step ii) contains residual solvent it can optionally be subjected to a step iii) of removing at least a part of the solvent to obtain a powder or concentrate comprising less than 10 wt%, preferably less than 8 wt%, more preferably less than 5 wt% of solvent, based on the total weight of the composition. In a particularly preferred embodiment the powder thus obtained is a free flowing powder, especially a free flowing powder with a volume weighted average particle diameter in the range of 0.01-1 mm. Drying can suitably be performed through e.g. freeze drying, roller drying, spray drying, evaporation or other drying methods known to those skilled in the art. It is preferred that the solution is dried by means of spray drying.

The present process can advantageously be used to isolate an ovalbumin-rich fraction from egg, egg white or an egg white protein isolate. The egg protein powder composition obtained in the present process preferably contains at least 10 wt% ovalbumin, more preferably at least 30 wt% ovalbumin and most preferably at least 40 wt% ovalbumin. Typically, the one or more other egg proteins selected from the group consisting of ovomucoid and lysozyme are contained in the present powder in a concentration of less than 25%, more preferably of less than 15% by weight of the ovalbumin contained therein. The conalbumin content of the powder preferably does not exceed 10% by weight, more preferably it does not exceed 8% by weight and most preferably it does not exceed 6% by weight of the ovalbumin contained therein.

In one embodiment of the invention the composition is particularly suited for cold-set gelation. The composition according this embodiment is characterised in that upon dilution of the composition in demineralised water to a concentration of 1 wt% ovalbumin, the solution exhibits a conductivity of less than 0.1 mS, preferably even less than 0.01 mS. Such compositions may be prepared by applying a desalination step before or after isolation of the ovalbumin-rich fraction. Desalination can suitably be achieved by applying membrane filtration and/or diafiltration. The desalination step can be performed either before or after step iii) in the preparation of the egg protein composition. Preferably, the desalination treatment is performed after step i) and prior to step iii).

It is a further object of the invention to provide a process for preparing a suspension of egg protein aggregates capable of cold gelation. More specifically, the process according to this embodiment comprises:
i. providing a solution of a desalinated egg protein composition having the aforementioned high weight ratio of ovalbumin to conalbumin, said solution containing at least 3 wt%, more preferably at least 5 wt% ovalbumin, calculated on the weight of the solution;
ii. subjecting the solution to heating and/or high pressure to obtain an aqueous suspension of egg protein aggregates in which at least 10 wt%, preferably more than 50 wt% and most preferably more than 80 wt% of the egg proteins is aggregated, based on dry weight. The amount of aggregation is established by determining the weight difference of precipitated material obtained when the pH of the solution is adjusted to its isoelectric point pH 4.8 at room temperature between the aqueous suspension of egg protein aggregates and the starting aqueous solution of desalinated egg protein composition.

In order to induce formation of sufficient aggregates, the second step can comprise a step of heating for at least 0.5 seconds at a temperature of at least 60 °C and/or pressurising to a hydrostatic pressure of at least 200 MPa for at least 10 seconds. Modem Ultra High Temperature (UHT) treatments known in the art are particularly suitable for obtaining the desired aggregation state. Combinations of heat and pressure treatments as well as other aggregation methods known to those skilled in the art can also be used.

Due to the reduced salt level of the desalinated egg protein composition, the suspension of aggregates having the aforementioned high weight ratio of ovalbumin to conalbumin obtained in the present process does not contain a cross-linked ovalbumin gel network. The absence of such a gel nework is evident from the fact that the suspension of aggregates behaves like a liquid. Typically, the suspension exhibits a viscosity of less than 500 mPa.s, preferably less than 100 mPa.s, measured at a shear rate of 50.

Optionally, the suspension of egg protein aggregates obtained in step ii) is subjected to a step iii) of removing at least a part of the solvent, preferably water, to obtain a concentrate of egg protein aggregates comprising less than 10 wt%, preferably less than 8 wt%, more preferably less than 5 wt% of solvent, based on the total weight of the composition. In a particularly preferred embodiment the powder thus obtained is a free flowing powder.

It is another object of the invention to provide a process for preparing a product comprising a cold gelled aqueous phase, comprising subjecting a product containing an aqueous phase and a desalinated suspension of egg protein aggregates as defined herein before to an acidification or salting step to induce gelation. Alternatively, such a solution can be obtained by diluting or redissolving the concentrate of egg protein aggregates obtained from step iii) to a suitable protein concentration. The concentration of aggregates desired in the final product depends on its application but will be known by the person skilled in the art.

In order to ensure the occurrence of sufficient gelation the acidification step preferably comprises adjustment of the pH to within 1.0 pH unit of the iso-electric point of the ovalbumin, i.e. about pH 4.6, contained in the composition by means of any suitable acidifier or lacton. In a preferred embodiment the acidification is induced by the addition of such an amount of glucono-delta-lactone (GDL) that the composition reaches the iso-electric point within 24 hours. Where gelation is induced using a salting step, this can for instance be achieved using calcium chloride or sodium chloride, typically at levels of 0.01 - 0.2 mol/l.

The benefits of the present invention are appreciated in both water-continuous and fat-continuous products. However, the beneficial effects are most pronounced in water-continuous products. Similarly, although high-fat products may advantageously comprise a gelled aqueous phase as described above, the benefits are especially prominent in products containing less than 50 wt% fat phase, preferably less than 30 wt% fat phase and most preferably less than 15 wt% fat phase. Cold gelation and thus cold gelling agents according to the invention find application in for example the preparation of heat-sensitive products with a delicate flavour and texture and in the production of encapsulates. Cold-gelling ingredients have a significant potential for new product applications, since they do not necessarily need a heat treatment to become functional.

It is yet another object of the invention to provide a process for preparing a product comprising a heat gelled aqueous phase, comprising subjecting a product containing an aqueous phase and an egg protein composition as defined herein before to a heating step to induce gelation of said composition. The gelation is most probably caused by disulphide cross-linking of those globular proteins, especially ovalbumin. Preferably, said composition has not been subjected to a desalination treatment as described above. It is preferred that the heating step involves a heating steptemperatures in the range of 65 to 95 °C.

Finally, the present invention relates to the use of the egg protein composition as defined herein before for cold or heat gelation of an aqueous phase contained in e.g. foodstuffs, beverages, oral care products or pharmaceutics and to provide a product that is obtained from cold or heat gelation using the gelation process of the invention.

The invention is further illustrated by means of the following examples.

### EXAMPLES

### Example 1 - Method to prepare a translucent gelled protein composition

50 grams of a commercial egg white powder (High pH hen's egg white powder, van Enthoven B.V., The Netherlands) was dissolved in 800 ml of demineralised water at a temperature of 20°C by slowly stirring for 30 minutes. Non-dissolved material was removed by centrifugation (10000g, 10 minutes). The starting material contained a weight ratio of ovalbumin to conalbumin of about 4.1:1.

In the pre-heating step, this solution was brought to a final protein concentration of 30 g/l and heated at 60 degrees for 30 minutes without stirring to induce the selective aggregation of conalbumin. The solution was allowed to cool to ambient temperature. Denatured and aggregated proteins were removed from this solution by adjusting the pH to 4.7 with a 1.0 M aqueous solution of HCl and subsequent centrifugation (10000 g, 30 minutes).

The solution was dialysed to remove salts and concentrated using the Labscale TFF system from Millipore equipped with three Biomax 30 polyethersulfone membranes. After three washes the conductivity of the protein solution was lower than 0.5 mS and the final protein concentration was 144 g/l. The protein concentration was brought to 50 g/l with demineralised water.

A second heating step (78 °C for 22 hours) was subsequently applied to induce aggregation of ovalbumin and the other egg-white proteins. The solution was again allowed to cool to ambient temperature.

The obtained solution of aggregates was gelled by adding glucono-delta-lactone as an acidifier to a final concentration of 0.37 wt%. The solution was incubated for 16 hours and reached a final pH of 4.7. The gel appeared as translucent to the eye. The absorbance at 500 nm due to the scattering was less than 1 in a 2 mm quartz cuvette as determined with a commercial Cary-l spectrophotometer (Varian Inc). A cylindrical gel specimen with a diameter of 2.0 cm and a height of 2.0 cm fractured at a stress of 8.9 kPa while compressing the sample at a speed of 1 mm/sec between 2 parallel plates with a diameter of 150 mm at room temperature using an Instron device (Model 5543).

The thus treated egg protein composition comprised 84.6 % ovalbumin, 0.6 % conalbumin, and 14 % ovomucoid and 0.8% lysozyme on weight basis.

### Comparison example I

A composition prepared according to the procedure described in example 1 was compared to the commercial egg white powder from which it was derived (High pH hen's egg white powder, van Enthoven B.V., The Netherlands) and a commercially available purified Ovalbumin composition (>98% pure, ref A5378, lot 022K7068, Sigma Corp, St. Louis, MO, USA). The purified ovalbumin was dissolved in demineralised water at a temperature of 20°C by slowly stirring for 120 minutes. The commercial henn's egg white powder was dissolved to 30g/L in demineralised water and subjected to diafiltration as described in example 1.

The critical gel concentration of the protein compositions was determined by heating a concentration series in standard 5 ml glass tubes to 78°C for 22hrs. Prior to heating the pH of the protein solutions was adjusted with a 1.0 M aqueous HCI solution to a pH of 7.0. The lowest concentration at which a gel is formed after this heat treatment is taken to be the critical gel concentration. The critical gel concentrations for commercial hen's egg white powder, the composition prepared according to example 1 and purified ovalbumin were found to be 73 g/L, 68 g/L and 57 g/L, respectively. This demonstrates that egg protein composition according to the present invention forms a heat set gel at significantly lower protein concentration compared to the commercial product. Furthermore, the gels obtained from the egg protein composition of example 1 appeared transparent to the eye, whereas the gel from the commercial hen egg white product was turbid and solid white to the eye.

In a second step the protein solutions were heated at 78 °C at a concentration 0.1g/L below their critical gel concentration for 20 hours, cooled and Glucono-delta-lactone was added in such an amount that the final pH after 20 hours reached a value of 4.7 (± 0.1). The obtained gels had measured turbidities of 1.1, 1.4 and 3.6 for ovalbumin, the present egg protein composition and the commercial egg white product, respectively. These results demonstrate that the gels prepared according to the present method are significantly more transparent. The true stress at fracture, measured as described in example 1, was 10.5, 10.9 and 15.5 kPa at true strains of 0.53, 0.56 and 0.70 for the ovalbumin, the present egg protein composition and the commercial egg white powder respectively. This demonstrates that gels prepared according to the new method are more spreadable than commercial egg white products and purified ovalbumin at comparable protein concentrations.

## Claims

1. An egg protein composition comprising, calculated on total dry weight:
- 5-95 wt% ovalbumin;
- 0-10 wt% conalbumin; and
- 0.2-40 wt% of one or more other egg proteins selected from the group consisting of ovomucoid and lysozyme;
wherein the weight ratio of ovalbumin to conalbumin exceeds 10:1.

2. The composition according to claim 1 in the form of a free flowing powder or a concentrate comprising less than 10 wt% of solvent, based on the total weight of the composition.

3. The composition according to claim 1 or 2, wherein the weight ratio of said other egg proteins to conalbumin exceeds 2:1.

4. The composition according to any one of the preceding claims, wherein said composition is **characterised in that** upon dilution in demineralised water to a concentration of 1 wt% ovalbumin, said solution exhibits a conductivity of less than 0.1 mS.

5. The composition according to claim 4, wherein at least 10 wt% of the egg proteins is aggregated, based on dry weight.

6. A process for preparing an egg protein powder composition, comprising:
i) providing a solution of egg proteins including ovalbumin and conalbumin and one or more other egg proteins selected from the group consisting of ovomucoid and lysozyme; and
ii) isolating an ovalbumin-rich fraction in which the weight ratio of ovalbumin to conalbumin is at least twice as high as the same ratio of the solution of egg proteins prepared in step i),
said ovalbumin-rich fraction comprising, calculated on total dry weight, 5-95 wt% ovalbumin and 0.2-40 wt% of the one or more other egg proteins.

7. The process according to claim 6, wherein the solution obtained in step i) comprises 5 to 75 % of the one or more other egg proteins, based on the weight of the ovalbumin.

8. The process according to claim 6 or 7, wherein the weight ratio of ovalbumin to conalbumin is increased in step ii) using selective adsorption and/or selective precipitation, followed by isolating an ovalbumin-rich fraction by means of decantation, elution, centrifugation and/or filtration.

9. The process according to claim 8, wherein the selective adsorption involves ion exchange chromatography and wherein the selective precipitation involves one or more treatments selected from heating, chemically induced precipitation and application of high pressure.

10. The process according to any one of claims 6 - 9, wherein the ovalbumin-rich fraction obtained in isolation step ii) contains residual solvent and is subjected to a step iii) of removing at least a part of the solvent to obtain a concentrate comprising less than 10 wt% of solvent, based on the total weight of the composition.

11. The process according to any one of claims 6-10, wherein the salt content of the solution of egg proteins is reduced to obtain a powder composition exhibiting a conductivity of less than 0.1 mS at a concentration of 1 wt% ovalbumin.

12. A process for preparing a suspension of egg protein aggregates capable of cold gelation, comprising:
i. providing a solution of a composition according to claim 4, said solution containing at least 3 wt% ovalbumin;
ii. subjecting the solution to heating and/or high pressure to obtain a suspension of egg protein aggregates.

13. The process according to claim 12, wherein the suspension of egg protein aggregates obtained in step ii) is subjected to a step iii) of removing at least a part of the solvent to obtain a concentrate of egg protein aggregates comprising less than 10 wt% of solvent, based on the total weight of the composition.

14. Use of a composition according to any one of claims 1-5 for cold or heat gelation of an aqueous phase contained in foodstuffs, beverages, oral care products or pharmaceutics.

15. A process for preparing a product comprising a cold gelled aqueous phase, comprising subjecting a product containing an aqueous phase and a composition according to claim 4 or 5 to an acidification or salting step to induce gelation in said composition.

16. The process according to claim 15, wherein the acidification comprises adjustment of the pH to within 1.0 of the iso-electric point of ovalbumin.

17. A process for preparing a product comprising a heat gelled aqueous phase, comprising subjecting a product containing an aqueous phase and a composition obtained according to any one of claims 1-3 to a heating step to induce gelation of said composition.

18. The process according to any one of claims 15-17, wherein the product is selected from the group consisting of foodstuffs, beverages, oral care products and pharmaceutics.
